# EUROPÄISCHE PATENTSCHRIFT

(11) **EP 1 887 264 B1**
(45) Veröffentlichungstag und Bekanntmachung des Hinweises auf die Patenterteilung: **15.10.2008**
(21) Anmeldenummer: 07113501.6
(22) Anmeldetag: 31.07.2007
(51) Int. Cl.: F16J 15/32

(54) **Verfahren zum Herstellen eines tribologischen Bauteils**
Method for manufacturing a tribiological component
Procédé destiné à la fabrication d'un composant tribologique

(30) Priorität: 07.08.2006 DE 102006037117; 04.01.2007 DE 102007001619
(43) Veröffentlichungstag der Anmeldung: 13.02.2008
(73) Patentinhaber: Schunk Kohlenstofftechnik GmbH, 35452 Heuchelheim (DE)
(72) Erfinder: Hück, Werner, 35633 Lahnau (DE)
(74) Vertreter: Stoffregen, Hans-Herbert

(56) Entgegenhaltungen:
- EP-A- 0 639 653
- DE-C- 475 456
- US-A- 1 467 256
- US-A- 3 994 054
- US-A- 4 541 157
- US-A- 4 693 139

## Beschreibung

Die Erfindung bezieht sich auf ein Verfahren zum Herstellen eines tribologischen Bauteils in Form eines Rings als Dichtung oder Gleitlager mit Außenumfangsfläche, Seitenflächen sowie Innenfläche, umfassend die Verfahrensschritte
- Herstellen eines einteiligen Rings aus einem spröden Werkstoff,
- Brechen des Rings in Segmente und
- Zusammensetzen der Segmente zur Bildung des tribologischen Bauteils,
wobei zum Brechen des Ringes in die Segmente entsprechend der Anzahl der Segmente von einer der Flächen des Rings ausgehend Vertiefungen in dem Ring ausgebildet werden.

Dichtungsringe aus Kohlenstoff-Graphit-Werkstoffen werden wegen der charakteristischen Eigenschaften dieser Werkstoffe seit vielen Jahren in Radialdichtungen sowohl bei umlaufenden als auch axialen Bewegungen mit Erfolg verwendet. Dabei sind die Radialdichtungen vorwiegend mehrteilig, also segmentiert ausgebildet. Die Aufteilung der Segmente hängt dabei von der Größe der Ringe ab. Um eine optimale Zusammensetzung zu erreichen, werden die Segmente mit Ziffern gekennzeichnet. Die Dichtungsringe selbst werden sodann mittels Federn gegen eine Welle oder Kolbenstange verspannt.

Aus der GB-A-1 003 913 ist eine Dichtung mit segmentiertem Aufbau bekannt, der durch Brechen eines Rings hergestellt wird und aus zwei Teilen besteht.

Aus der DE. Z.: Schunk, Informationsschrift: "Dichtungsringe für radiale Dichtungen", oder DE. Z.: Schunk, Informationsschrift: "Lager- und Dichtungstechnik", 2005, sind Dichtungsringe bekannt, die mehrteilig ausgebildet sind. Dabei kann ein Ring durch Sägen in drei Segmente aufgeteilt werden, die beim Einsatz in stumpfem Stoß aneinander grenzen. Auch besteht die Möglichkeit, die Segmente getrennt herzustellen, um diese sodann im überlappt, verzapften Stoß oder überlappten Stoß zusammenzusetzen.

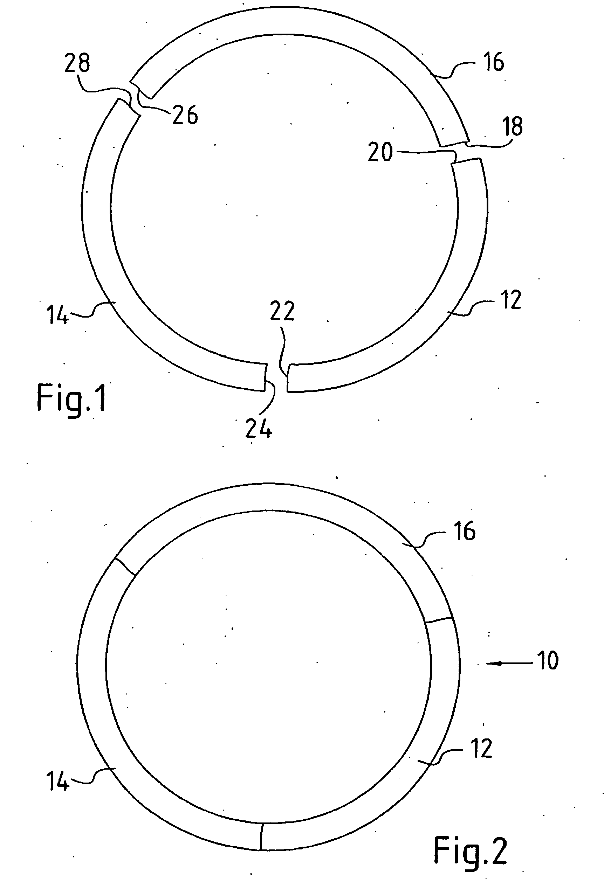

Ein Verfahren zur Herstellung eines Rings aus zumindest drei Segmenten ist der DD-B-44 765 zu entnehmen. Das hergestellte tribologische Bauteil in Form eines Dichtrings weist nach der Darstellung der Fig. 2 drei gesprengte Teilfugen auf, wodurch sich eine labyrinthartige Dichtwirkung ergibt.

Aus der CH-A-406 762 ist eine Dichtungsanordnung bekannt, bei der zweiteilige Dichtungsringe zum Einsatz gelangen. Dabei können die Endflächen gelappt oder unbearbeitet sein. Ein Brechen der Ringe erfolgt mit Hilfe einer scharfen Kante.

Aus der US-A-1467 256 ist eine Dichtung bekannt, die mittels eines von einem Dorn ausgehenden scharfen Klingen in drei Teile geteilt wird.

Um das größere Auge einer Pleuelstange nach der US-A-3,994,054 zu teilen, werden Durchgangsbohrungen eingebracht, in die zwei die Form eines Konus aufweisende und von einem Träger ausgehende Dorne gleichzeitig eingetrieben werden. Da die Dorne einen festen Abstand zueinander aufweisen, müssen infolgedessen die Durchgangsbohrungen auf diesen ausgelegt werden. Diese Nachteile werden nach der DE-C-475 456 bei einem aus Metall bestehenden Ring vermieden, da in die in dem Ring eingebrachten Bohrlöcher nacheinander ein Werkzeug eingebracht wird, um den Ring zu brechen. Allerdings muss zuvor in die jeweilige Bohrung ein zweiteiliges Füll- oder Treibstück eingesetzt werden, das zusammengesetzt die Form eines Zylinders aufweist. Zwischen die Trennflächen der Halbzylinder wird sodann ein Meißel eingetrieben, um über die Halbzylinder die erforderlichen Kräfte auf den Ring zu übertragen, damit der Ring bricht.

Ein gattungsgemäßes Verfahren ist aus der DE-A-101 55 653 bekannt. Zum Brechen des Ringes in drei Teile gehen von der Innenfläche des Ringes Kerben aus, die sich bis zu den Seitenflächen erstrecken. In den Ring wird sodann eine zweiteilige Scheibe eingelegt, dessen Fugen auf die Kerben ausgerichtet werden. In den Spalt zwischen den Scheiben wird anschließend stoßartig ein Werkzeug eingetrieben, wodurch ein Sprengen bzw. Auseinanderreißen des Ringes erfolgt.

Der vorliegenden Erfindung liegt die Aufgabe zugrunde, ein Verfahren der eingangs genannten Art so weiterzubilden, dass der Ring in eine gewünschte Anzahl von Segmenten gebrochen werden kann, wobei sich Bruchflächen ergeben, die einer Nacharbeitung nicht bedürfen. Gleichzeitig soll sichergestellt sein, dass ein Brechen in die gewünschte Anzahl von Segmenten verfahrensmäßig einfach durchgeführt werden kann.

Zur Lösung der Aufgabe sieht die Erfindung vor, dass zum Brechen des Rings in die Segmente ein Werkzeug in die Vertiefung eingebracht wird, das eine konisch verlaufende Spitze mit parallel zu den Seitenflächen ausrichtbaren Abflachungen aufweist und dass beim Einbringen des Werkzeuges in die Vertiefung, die Abflachungen der Spitze parallel oder nahezu parallel zu den Seitenflächen des Rings ausgerichtet werden, so dass der Ring in die Segmente mit radial und quer zu den Seitenflächen des Rings verlaufenden Bruchflächen bricht.

Erfindungsgemäß wird ein ringförmiges Bauteil durch Brechen eines Rings in Segmente unterteilt, die sodann derart zusammengesetzt werden, dass deren zueinander passenden Bruchflächen aufeinander liegen. Dabei ist durch das Ausbilden der Vertiefungen und das unmittelbare Einbringen des Werkzeuges in die jeweilige Vertiefung sichergestellt, dass der Ring derart in die Segmente gebrochen wird, dass die Funktions- also Dichtflachen nicht beschädigt werden, so dass stets die gewünschte Dichtfunktion gegeben ist. Die Vertiefungen selbst laufen beabstandet zu den funktionsrelevanten Flächen wie Seitenflächen des Rings.

Erfindungsgemäß ist vorgesehen, dass die Vertiefung von einer nicht funktionsrelevanten Fläche ausgeht. Hierbei handelt es sich üblicherweise um die Außenumfangs- oder Innenfläche des Rings. Die Vertiefung selbst kann durch spanloses Verfahren wie Einformen im Grünkörper des Rings, also im nicht durchgesinterten Zustand, oder durch spanbearbeitendes Verfahren wie Fräsen, Bohren oder Erodieren ausgebildet sein.

Insbesondere ist vorgesehen, dass das ringförmige Bauteil in drei gleiche oder nahezu drei gleiche Teile gebrochen wird, wobei die Segmente derart zusammengesetzt werden, dass die Reihenfolge der Segmente beibehalten wird. Somit bleiben die Funktionsflächen erhalten, d. h. die die Dichtwirkung bzw. Gleitflächen ausübenden Flächen bleiben unverändert erhalten, ohne dass Spalt oder ähnliches entstehen.

Mit anderen Worten werden die Segmente so zusammengesetzt, dass ihre ursprüngliche Reihenfolge beibehalten wird, so dass die Bruchflächen passgenau und somit formschlüssig aufeinander zu liegen kommen, so dass die gewünschte Dicht- bzw. Lagerwirkung sichergestellt ist. Dabei ist von besonderem Vorteil, dass aufgrund der Dreiteilung optimale Anlageflächen zur Verfügung stehen, gleichzeitig jedoch ein kostengünstiges Herstellungsverfahren genutzt werden kann.

Durch die erfindungsgemäße Lehre und insbesondere die Verwendung eines Werkzeuges mit Schlüsselflächen, die beim Eintreiben des Werkzeugs in die Vertiefungen parallel oder in etwa parallel zu den Seitenflächen verlaufen, sind definierte Bruchflächen herstellbar, die somit sicherstellen, dass die Funktionsflächen die gewünschte Dichtwirkung zeigen.

Als Werkstoffe, aus denen das tribologische Bauteil hergestellt wird, kommen insbesondere Kohlenstoff-Graphit- und Elektro-Graphitwerkstoffe und solche in Frage, die mit Salzen, Metallen oder Harzen infiltriert sind. Aber auch übliche keramische Werkstoffe können verwendet werden wie z. B. Oxidkeramikwerkstoffe wie Aluminiumoxid oder Nichtoxidkeramikwerkstoffe wie Siliciumkarbid, Siliciumnitrid, Aluminiumnitrid, Borkarbid oder Bornitrid.

Zur Herstellung eines ringförmigen tribologischen Bauteils in Form einer Dichtung oder eines Gleitlagers sind insbesondere die Verfahrensschritte vorgesehen:
- Herstellen eines einteiligen Rings aus einem spröden Werkstoff mit Außenumfangsfläche, Seitenflächen und einer auf einer Welle oder einer Kolbenstange anlegbaren Innen- oder Außenfläche,
- Einbringen von drei radialen Vertiefungen, die von der Innen- oder Außenumfangsfläche des Rings ausgehen,
- Einbringen eines Werkzeugs in jede der Vertiefungen derart, dass der Ring mit radial und quer zu den Seitenflächen des Rings verlaufenden Bruchflächen in drei Segmente zerbricht, und
- Zusammensetzen der durch das Brechen hergestellten Segmente zu einem Ring, wobei die zueinander passenden Bruchflächen aufeinander liegen.

Dabei ist vorgesehen, dass nacheinander in die Vertiefungen das Werkzeug zum Brechen des Rings eingebracht wird. Es greift folglich nicht gleichzeitig in alle Vertiefungen ein Werkzeug ein. Der so hergestellte aus den drei Segmenten bestehende Ring wird sodann peripher von einem Druck- oder Zugelement umgeben.

Die radialen Vertiefungen werden insbesondere bei spanlosem Ausbilden in den Ring eingebracht, bevor dieser durchgesintert ist, also in den Grünkörper des Rings. Bei spanbearbeitendem Verfahren können die Vertiefungen ausgebildet werden, nachdem der Ring durchgesintert ist. Aber auch ein Bearbeiten im Grünstadium des Rings ist möglich.

Die jeweilige Vertiefung sollte mittig zwischen den Seitenflächen verlaufen und im Mittenbereich zwischen der Außenumfangsfläche und der inneren Fläche des Rings enden, vorzugsweise 2/3 bis 5/6, insbesondere in etwa 4/5 der Höhe des Rings von der Außenumfangsfläche ausgehend durchsetzen, sofern die Vertiefungen von der Außenumfangsfläche ausgehen. Gehen die Vertiefungen von der Innenfläche aus, so sollte der Abstand zwischen Innenfläche und dem Boden der Vertiefung ebenfalls in etwa 2/3 bis 5/6, insbesondere in etwa 4/5 der Höhe des Rings betragen.

Vorzugsweise werden gleichmäßig über die Umfangsfläche verteilt insgesamt drei radial verlaufende Vertiefungen wie Sacklöcher ausgehend von der Umfangsfläche in den Ring eingebracht, in die sodann nacheinander ein Werkzeug eintreibbar ist, damit der Ring in die drei Segmente zerbricht, wobei die Bruchflächen quer, vorzugsweise senkrecht zu den Seitenflächen verlaufen.

Der Konus weist eine Geometrie derart aus, dass im Abstand zur Spitze ein Durchmesser besteht, der größer als lichter Durchmesser der Vertiefung an der Fläche ist, von der die Vertiefung ausgeht, so dass die Spitze des Werkzeuges vor Eintreiben dieses in die Vertiefung nicht auf deren Boden aufsteht.

Erfindungsgemäß wird ein sprödes Material in mehr als zwei, vorzugsweise drei Teile gebrochen. Dies wird erfindungsgemäß dadurch ermöglicht, dass zuvor im Bereich der Bruchstellen die Vertiefungen ausgebildet werden, in die sodann das Werkzeug eingebracht wird. Damit die Bruchflächen den gewünschten Verlauf haben, ohne dass beim Brechen in den Randbereichen der Bruchflächen Material abgelöst wird, wobei die Dichtflächen des Rings zerstört werden würden, ist insbesondere vorgesehen, dass das Werkzeug mit einer konisch ausgebildeten Spitze in die Vertiefung einbringbar ist, wobei die Spitze in Richtung der Seitenflächen des Rings abgeflacht ist.

Das in die Vertiefung einbringbare Werkzeug bzw. der Abschnitt, der auf den Ring zum Brechen des Rings einwirkt, kann mit einem abgeflachten Dorn verglichen werden, dessen Flachseiten entlang der Seitenflächen des Rings verlaufen. Auch eine Umschreibung als Konus mit zwei Schlüsselflächen ist möglich, die entlang der Seitenflächen ausgerichtet werden.

Der Konus weist eine Geometrie derart auf, dass im Abstand zur Spitze ein Durchmesser besteht, der im Fall eines Sacklochs als Vertiefung größer als der Durchmesser des Sacklochs ist, bevor die Spitze auf dem Boden des Sacklochs aufstehen würde.

Bei Herstellung des Grundrings mit Minustoleranz bezüglich seines Innendurchmessers verlaufen die Bruchflächen der Segmente beim Umfassen einer Welle zunächst beabstandet zueinander, um sodann nach Einlaufen auf Block aufeinander zu stoßen. Hierdurch ist sichergestellt, dass die gewünschte Dichtwirkung im hinreichenden Umfang erzielbar ist.

Des Weiteren sollten von einer Fläche weitere Vertiefungen wie Sacklöcher oder Nuten ausgehen, in die Fixier- oder Arretierelemente einbringbar sind, um den Dichtring radial bzw. axial zu fixieren. Dabei können die entsprechenden Vertiefungen diejenigen oder Abschnitte derjenigen sein, die zum Eintreiben des Werkzeugs benötigt werden, um den Ring zu brechen. Es besteht jedoch auch die Möglichkeit, die entsprechenden weiteren Vertiefungen wie Sacklöcher oder Nuten beabstandet zu den für das Brechen benötigten Vertiefungen anzuordnen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: drei Segmente eines ringförmigen Bauteils,
- Fig. 2: ein aus den Segmenten gemäß Fig. 1 zusammengesetztes tribologisches Bauteil,
- Fig. 3: einen Ausschnitt eines Rings in dem Bereich, in dem dieser durch Brechen unterteilt wird,
- Fig. 4: einen Abschnitt eines Rings mit von der Außenumfangsfläche ausgehender Vertiefung und zugeordnetem Werkzeug,
- Fig. 5: eine weitere Darstellung eines Rings in Draufsicht und
- Fig. 6: einen Schnitt entlang den Linien AC in Fig. 5 .

Zur Herstellung eines tribologischen Bauteils in Form vorzugsweise einer Dichtung (Axial- oder Radialdichtung) oder eines Gleitlagers wird erfindungsgemäß ein aus Kohlenstoff-Graphitmaterial, Elektrographit oder Keramik wie SiC bestehender Ring 10 hergestellt, der sodann radial durchbrochen wird, um im Ausführungsbeispiel drei Segmente 12, 14, 16 herzustellen. Der Ring 10 kann einen rechteckigen bzw. rechteckförmigen oder ungleichschenklig trapezförmigen Querschnitt aufweisen, um nur einige Beispiele zu nennen. Die Segmente 12, 14, 16 werden sodann auf eine Welle oder eine Kolbenstange gesetzt und peripher von einem Zugelement wie Schraubenzugfeder umgeben, so dass die Segmente 12, 14, 16 auf der Welle bzw. der Kolbenstange aufsitzen und nach dem Einlaufen peripher gleichfalls passgenau zusammengesetzt sind, also die durch das Brechen hergestellten Bruchflächen 18, 20 bzw. 26, 28 passgenau und formschlüssig aufeinander liegen. Dabei kann der Ringkörper bezüglich seines Innendurchmessers mit Minustoleranz hergestellt werden, so dass die Segmente 12, 14, 16 nach dem Aufsetzen auf einer Welle oder einem Kolben bezüglich der Bruchflächen 18, 20, 22, 24, 26, 28 zunächst beabstandet zueinander verlaufen und erst nach dem Einlaufen das formschlüssige Aufeinanderliegen erfolgt. Eine passgenaue Herstellung ist selbstverständlich gleichfalls möglich.

Es ergibt sich nach dem Einlaufen eine praktisch berührungsfreie Spaltdichtung mit minimalem Spaltverlust und damit hoher Dichtwirkung.

Entsprechende Axial- oder Gleitringdichtungen und Radialdichtungen sind sowohl für die umlaufende als auch für axiale Bewegungen einer Welle bzw. eines Kolbens geeignet.

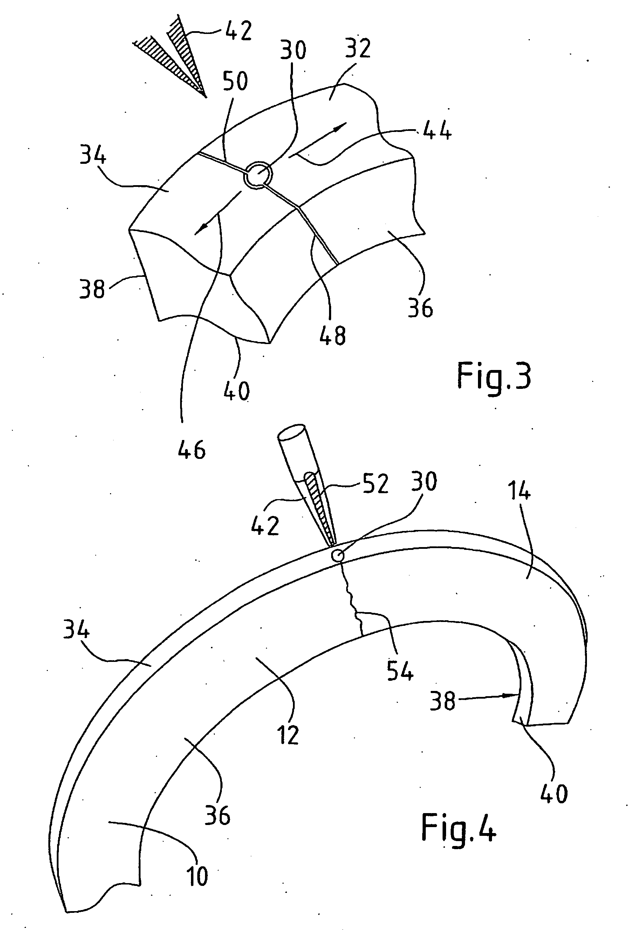

Um einen der Fig. 2 zu entnehmenden Ring aus einem spröden Werkstoff herzustellen, also einen zunächst einteiligen Ring in drei Teile zu brechen, die gleich groß sind, wird erfindungsgemäß wie folgt vorgegangen. Nachdem der Ring aus dem spröden Werkstoff wie z. B. Kohlenstoff-Graphitwerkstoff oder Elektrographitwerkstoff, die ggfs. mit Salzen, Metallen oder Harzen infiltriert sein können, oder einem keramischen Werkstoff in gewohnter Weise hergestellt worden ist, werden im gleichen Abstand zueinander drei Vertiefungen vorzugsweise in Form von Bohrungen 30 in den einteiligen Ring 32 von dessen Außenumfangsfläche 34 ausgehend eingebracht, wie der Ausschnitt des Rings 32 gemäß Fig. 3 verdeutlicht. Dabei verläuft die Bohrung 30 sowohl radial als auch mittig zwischen den Seitenflächen 36, 38 des Rings 32. Des Weiteren sollte die ein Sackloch darstellende Bohrung 30 eine Tiefe aufweisen, die zumindest in etwa in der Mitte, vorzugsweise 2/3 bis 5/6 zwischen der Außenumfangsfläche 34 und der Innenfläche 40 des Rings 32 verläuft, also in etwa 1/3 bis 1/6 vor der Innenfläche 40 endet. In die Bohrung 30 wird sodann die Spitze 42 eines Werkzeuges eingebracht. Die Spitze 42 verjüngt sich konisch und ist derart abgeflacht, dass die breitere Seite sich entlang der Seitenflächen 36, 38 des Rings 32 erstreckt. Hierdurch bedingt wirken beim Eindringen des Werkzeuges in die Bohrung 30 von der Bohrung 30 ausgehende Kräfte in Richtung der Pfeile 44, 46, wodurch der Ring 32 in einer Ebene bricht, die quer bzw. senkrecht zu den Seitenflächen 36, 38 sowie der Außenumfangsfläche 34 und der Innenfläche 40 verläuft. Dies wird durch die Linie 48, 50 in der Fig. 3 rein schematisch angedeutet.

Mit anderen Worten ist die Spitze 42 des Werkzeuges mit einer abgeflachten Speerspitze bzw. mit einem abgeflachten Dorn zu vergleichen, wobei die Breitseiten sich entlang der Seitenflächen 36, 38 des Rings 32 beim Eindringen des Werkzeuges in die Bohrung 30 erstrecken.

Anhand der Fig. 4 soll noch einmal das erfindungsgemäße Verfahren zur Herstellung von Bruchflächen in einem einteiligen Ring verdeutlicht werden, um sodann durch Zusammensetzen der durch das Brechen hergestellten Segmente ein tribologisches Bauteil in Form einer Dichtung oder eines Gleitlagers zur Verfügung zu stellen. Dabei werden die Bezugszeichen benutzt, die im Zusammenhang mit den Fig. 1 bis 3 verwendet werden.

Der in der Fig. 4 im Ausschnitt dargestellte Ring 10 weist eine von der Außenumfangsfläche 34 ausgehende Vertiefung 30 auf, die durch spanbearbeitendes Verfahren wie Fräsen oder Erodieren ausgebildet ist. In die Vertiefung 30 wird sodann die Spitze 42 eines Werkzeugs eingetrieben. Die Spitze verjüngt sich dabei zum freien Ende konisch und weist Schlüsselflächen 52 auf, die beim Eintreiben der Spitze 42 in die Vertiefung 30 parallel zu den Seitenflächen 36, 38 des Rings 10 ausgerichtet werden. Hierdurch bedingt bildet sich ein durchgehender Riss 54 aus, der den Bruch des Rings 10 bei Krafteinwirkung auf die zu dem Riss 54 benachbarten Bereiche vorgibt. Ein Ausbrechen der Ränder der Bruchflächen erfolgt nicht, so dass die einzelnen Segmente passgenau mit der Folge zusammengesetzt werden können, dass die Seitenflächen 36, 38 die erforderliche Dichtwirkung gewährleisten.

Geht im Ausführungsbeispiel die Vertiefung 30 von der Außenumfangsfläche 34 aus, so besteht selbstverständlich auch die Möglichkeit, dass von der Innenfläche 40 entsprechende Vertiefungen 30 ausgehen, deren Längsachsen parallel zu den Seitenflächen 36, 38 und mittig zwischen diesen verlaufen sollten.

Die Tiefe der Aussparungen, bei denen es sich vorzugsweise um Sacklöcher handelt, hängt insbesondere von dem verwendeten Werkstoff ab. Versuche haben ergeben, dass der Boden der Vertiefung 30 in etwa im Abstand von 2/3 bis 5/6 der Höhe des Rings 30 ausgehend von der Öffnung enden sollte. Andere Dimensionierungen sind gleichfalls möglich. Auch kann gegebenenfalls die Vertiefung 30 als Durchgangsöffnung bzw. -bohrung ausgebildet sein, also sich von der Außenumfangsfläche 34 bis zur Innenfläche 40 erstrecken, ohne dass die Erfindung verlassen wird, sofern es sich hierbei nicht um Funktionsflächen handelt.

Werden bevorzugter Weise die im äquidistanten Abstand entlang der Außenumfangsfläche 34 verteilten drei Bohrungen 30 nach der Herstellung des Rings 32 eingebracht, so können selbstverständlich bei der Herstellung des Rings 32 die entsprechenden Vertiefungen ausgeformt werden.

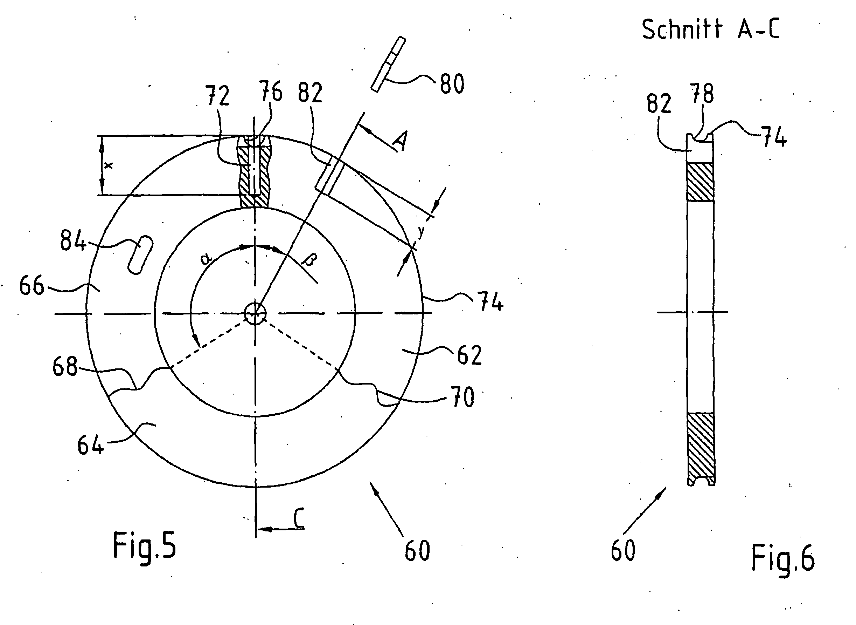

In der Fig. 5 ist eine Draufsicht eines Dichtungsrings 60 dargestellt, der entsprechend der erfindungsgemäßen Lehre in drei Segmente 62, 64, 66 gebrochen und sodann wieder zusammengesetzt wird. Dabei kann der Abstand zwischen den Bruchlinien bzw. - flächen 68, 70 äquidistant über den Umfang verteilt werden, also die Bruchlinien 78, 70 einen Winkel α einschließen, der 120° oder in etwa 120° beträgt. Man erkennt des Weiteren, dass zum Brechen des Ringes 60 in die Segmente 62, 64, 66 an den auszubildenden Bruchstellen bzw. -flächen 68, 70 zuvor Vertiefungen insbesondere in Form von Sacklöchern 72 eingebracht sind, die sich über die Höhe des Rings 60 ausgehend von der Außenfläche 74 mit einem Maß x erstrecken, das in etwa 2/3 bis 5/6 der Höhe des Ringes 60 entspricht, ohne dass hierdurch eine Einschränkung der erfindungsgemäßen Lehre erfolgen soll. Unabhängig hiervon ist der Durchmesser des Sackloches 72 derart, dass dieser kleiner als die Breite des Rings 60 ist, also sich ausschließlich innerhalb des Rings 60 das Sackloch 72 oder eine entsprechende Vertiefung erstreckt. Dies schließt jedoch nicht aus, dass im Außenrandbereich eine in axialer Richtung verlaufende Nut 76 verläuft, von dessen Boden sodann die Sacklochbohrung 72 ausgeht.

Entsprechend dem Stand der Technik weist die Umfangsfläche 74 eine umlaufende Nut 78 auf, in die ein Spannring eingebracht wird, um die Segmente 62, 64, 66 zu sichern. Um ein radiales bzw. axiales Verschieben des Dichtrings 60 nach Anordnung dieses auf z. B. einer Welle zu verhindern, sind des Weiteren entsprechend bekannter Dichtungsanordnungen Nuten oder Sacklöcher vorgesehen, in die Arretier- oder Fixierelemente 80 eingreifen, die z. B. lösbar von einer Wandung einer Kammer ausgehen, in die der Dichtring bzw. mehrere Dichtringe 60 eingebracht werden. Wie sich aus den Fig. 5 und 6 ergibt, kann eine axial verlaufende Nut 82 von der Umfangsfläche 74 ausgehend als Aufnahme für das entsprechende vorzugsweise stift- oder plattenförmig ausgebildete Arretier- oder Fixierelement 80 vorgesehen sein, die zu dem Sackloch 72, in das das Werkzeug zum Sprengen des Dichtrings 60 eingebracht wird, einen Winkel β beschreibt, der zwischen 0° und 120° liegen kann. Somit kann das Sackloch 72 auch als Aufnahme für das Fixierelement 80 dienen. Wird eine Nut zur Aufnahme des Fixierelementes 80 benutzt, so darf die Nut selbstverständlich keine Funktionsflächen des Dichtringes durchsetzen. Die Tiefe y der Nut 82 bzw. des Sacklochs kann im Bereich der halben Höhe des Rings 60 liegen.

Geht die Aufnahme für das Fixierelement 80 vorzugsweise von der Außenumfangsfläche 74 aus, so kann auch in einer Seitenfläche eine entsprechende Vertiefung 84 wie Langloch ausgebildet werden, in dem ein Fixierelement eingreift.

Die Anzahl der Aufnahmen für Fixierelemente ist nicht auf 1 beschränkt. Vielmehr können entsprechend der Anforderungen entsprechend viele Aufnahmen in dem Dichtring 60 ausgebildet und Fixierelemente eingesetzt werden.

Ist das erfindungsgemäße Verfahren anhand eines in drei Teile zu brechenden Rings erläutert worden, so wird die Erfindung auch dann nicht verlassen, wenn ein Ring in einer hiervon abweichenden Anzahl von Segmenten aufgeteilt werden soll und/oder die Segmente unterschiedliche Bogenlängen aufweisen.

Ferner können die die Risse und damit Bruchflächen vorgebenden Vertiefungen auch bereits vor Fertigstellung des Rings, insbesondere im Grünkörper durch zum Beispiel Einpressen ausgebildet werden.

## Patentansprüche

1. Verfahren zum Herstellen eines tribologischen Bauteils in Form eines Rings (10, 60) als Dichtung oder Gleitlager mit Außenumfangsfläche (34, 74), Seitenflächen (36,38) sowie Innenfläche (40) umfassend die Verfahrensschritte
- Herstellen eines einteiligen Rings aus einem spröden Werkstoff,
- Brechen des Rings in Segmente (12, 14, 16, 62, 64, 66) und
- Zusammensetzen der Segmente zur Bildung des tribologischen Bauteils,
wobei zum Brechen des Rings in die Segmente entsprechend der Anzahl der Segmente von einer der Flächen des Rings ausgehend Vertiefungen (30, 72) in dem Ring ausgebildet werden,
**dadurch gekennzeichnet,**
**dass** zum Brechen des Rings (10,60) in die Segmente (12, 14, 16, 62, 64, 66) ein Werkzeug (42) in die Vertiefung (30, 72) eingebracht wird, das eine konisch verlaufende Spitze mit parallel zu den Seitenflächen ausrichtbaren Abflachungen (52) aufweist und dass beim Einbringen des Werkzeuges (42) in die Vertiefung (30, 72), die Abflachungen (52) der Spitze parallel oder nahezu parallel zu den Seitenflächen (36, 38) des Rings (10, 60) ausgerichtet werden, so dass der Ring in die Segmente (12, 14, 16, 62, 64, 66) mit radial und quer zu den Seitenflächen (36, 38) des Rings verlaufenden Bruchflächen (68, 70) bricht.

2. Verfahren nach Anspruch 1,
**dadurch gekennzeichnet,**
**dass** die Vertiefung (30, 72) von einer nicht funktionsrelevanten Fläche (34, 74) des einteiligen Rings ausgehend ausgebildet wird und beabstandet zu funktionsrelevanten Flächen endet.

3. Verfahren nach Anspruch 1 oder 2,
**dadurch gekennzeichnet,**
**dass** die Vertiefung (30, 72) von der Außen- und/oder Innenfläche (34, 40, 74) des einteiligen Rings (10, 60) ausgehend und radial verlaufend ausgebildet wird.

4. Verfahren nach zumindest einem der vorhergehenden Ansprüche,
**dadurch gekennzeichnet,**
**dass** die Vertiefung (30, 72) durch ein spanloses Verfahren wie durch Einpressen in den Ring (10, 60) in seinem Grünstadium oder durch ein spanbearbeitendes Verfahren wie durch Fräsen, Bohren oder Erodieren in den durchgesinterten Ring (10, 60) ausgebildet wird.

5. Verfahren nach zumindest Anspruch 1,
**dadurch gekennzeichnet,**
**dass** in dem Ring (10, 60) vorzugsweise insgesamt drei auf der Außenumfangs- oder Innenfläche (34, 40, 74) verteilt angeordnete Vertiefungen ausgebildet werden.

6. Verfahren nach zumindest Anspruch 1,
**dadurch gekennzeichnet,**
**dass** die Vertiefung (30, 72) derart ausgebildet wird, dass diese in etwa mittig zwischen den Seitenflächen (36, 38) des Rings (10, 60) verläuft.

7. Verfahren nach zumindest Anspruch 1,
**dadurch gekennzeichnet,**
**dass** die Vertiefung (30, 72) von der Außen- oder Innenumfangsfläche ausgehend als Ausgangsfläche im Abstand 2/3 bis 5/6 der Höhe des Rings von der Ausgangsfläche endet.

8. Verfahren nach zumindest Anspruch 1,
**dadurch gekennzeichnet,**
**dass** das Werkzeug (42) nacheinander in jeweiligen Vertiefungen (30, 72) zum Brechen des Ringes (10, 60) eingebracht wird.

9. Verfahren nach zumindest Anspruch 1,
**dadurch gekennzeichnet,**
**dass** von zumindest einer Außenfläche (74) des Rings (60) eine weitere Vertiefung (82, 84) wie Sackloch oder Langloch oder Nut eingebracht wird, in das bzw. die ein Arretier- bzw. Fixierelement (80) eingesetzt wird.

## Claims

1. Method for manufacturing a tribological component in the form of a ring (10, 60) as sealing or sliding bearing with outer peripheral area (34, 74), lateral surfaces (36, 38) as well as inner surface (40) including the steps
- manufacturing a one-part ring of brittle material,
- breaking the ring into segments (12, 14, 16, 62, 64, 66) and
- assembling the segments to construct the tribological component,
whereby proceeding from one of the surfaces of the ring, depressions (30, 72) are constructed in the ring for breaking the ring into segments corresponding the number of segments,
**characterized in**
**that** for breaking the ring (10, 60) into the segments (12, 14, 16, 62, 64, 66), a tool (42) is inserted into the depression (30, 72), which has a conically running tip with flattenings (52) which can be oriented parallel to the lateral surfaces, and that when inserting the tool (42) into the depression (30, 72), the flattenings (52) of the tip are oriented parallel or almost parallel to the lateral surfaces (36, 38) of the ring (10, 60), so that the ring breaks into the segments (12, 14, 16, 62, 64, 66) with fractured surfaces (68, 70) running radially and transversely in relation to the lateral surfaces (36, 38) of the ring.

2. Method according to claim 1,
**characterized in**
**that** the depression (30, 72) is formed proceeding from a non-functionally relevant surface (34, 74) of the one-piece ring and ends at a distance in relation to the functionally relevant surfaces.

3. Method according to claim 1 or 2,
**characterized in**
**that** the depression (30, 72) is formed proceeding from the outer and/or inner surface (34, 40, 74) of the one-piece ring (10, 60) and running radially.

4. Method according to at least one of the preceding claims,
**characterized in**
**that** the depression (30, 72) is formed with a non-cutting method, such as pressing into the ring (10, 60) in its green stage, or through a cutting processing method, such as milling, boring or eroding into the sintered ring (10, 60).

5. Method according to at least claim 1,
**characterized in**
**that** in the ring (10, 60) are formed preferably three depressions in total, arranged distributed on the outer peripheral or inner surface (34, 40, 74).

6. Method according to at least claim 1,
**characterized in**
**that** the depression (30, 72) is formed such that this runs approximately centrally between the lateral surfaces (36, 38) of the ring (10, 60).

7. Method according to at least claim 1,
**characterized in**
**that** the depression (30, 72), proceeding from the outer or inner peripheral surface, ends as working face spaced 2/3 to 5/6 of the height of the ring from the work face.

8. Method according to at least claim 1,
**characterized in**
**that** the tool (42) is successively inserted in respective depressions (30, 72) for breaking the ring (10, 60).

9. Method according to at least claim 1,
**characterized in**
**that** from at least one outer surface (74) of the ring (60), a further depression (82, 84), such as blind hole or slot or groove, is inserted, into which a latching or fixing element (80) is positioned.

## Revendications

1. Procédé destiné à la fabrication d'un composant tribologique sous forme d'un anneau (10, 60) en tant que joint ou palier lisse avec une surface circonférentielle extérieure (34, 74), des surfaces latérales (36, 38) ainsi qu'une surface intérieure (40), comprenant les étapes suivantes :
- fabrication d'un anneau en une pièce dans un matériau cassant,
- coupure de l'anneau en segments (12, 14, 16, 62, 64, 66) et
- assemblage des segments pour former le composant tribologique,
sachant que pour la coupure de l'anneau en segments sont formés dans celui-ci des évidements (30, 72) selon le nombre de segments désirés et à partir d'une des surfaces de l'anneau,
**caractérisé en ce**
**que**, pour couper l'anneau (10, 60) en segments (12, 14, 16, 62, 64, 66), est introduit un outil (42) dans l'évidement (30, 72), lequel présente une pointe s'étendant de façon conique avec des aplatissements (52) pouvant être orientés parallèlement aux surfaces latérales, et que les aplatissements (52) de la pointe sont orientés parallèlement ou approximativement parallèlement aux surfaces latérales (36, 38) de l'anneau (10, 60) lors de l'introduction de l'outil (42) dans l'évidement (30, 72), si bien que l'anneau se casse en segments (12, 14, 16, 62, 64, 66) selon des surfaces de rupture (68, 70) s'étendant radialement et transversalement aux surfaces latérales (36, 38) de l'anneau.

2. Procédé selon la revendication 1,
**caractérisé en ce**
**que** l'évidement (30, 72) est formé à partir d'une surface non fonctionnelle (34, 74) de l'anneau en une pièce et se termine à distance des surfaces fonctionnelles.

3. Procédé selon la revendication 1 ou 2,
**caractérisé en ce**
**que** l'évidement (30, 72) est formé à partir de la surface extérieure et/ou intérieure (34, 40, 74) de l'anneau en une pièce (10, 60) et de manière à s'étendre radialement.

4. Procédé selon au moins l'une des revendications précédentes,
**caractérisé en ce**
**que** l'évidement (30, 72) est formé au moyen d'un procédé sans enlèvement de copeaux tel que par enfoncement dans l'anneau (10 ,60) dans son stade primaire ou au moyen d'un procédé fonctionnant par enlèvement de copeaux, tels que le fraisage, le perçage ou l'érodage dans l'anneau fritté (10, 60).

5. Procédé selon la revendication 1,
**caractérisé en ce**
**qu'**est formé dans l'anneau (10, 60) de préférence un total de trois évidements répartis sur la surface circonférentielle extérieure ou sur la surface intérieure (34, 40, 74).

6. Procédé selon la revendication 1,
**caractérisé en ce**
**que** l'évidement (30, 72) est formé de telle manière que celui-ci s'étend approximativement au milieu par rapport aux deux surfaces latérales (36, 38) de l'anneau (10, 60).

7. Procédé selon la revendication 1,
**caractérisé en ce**
**que** l'évidement (30, 72) se termine, à partir de la surface circonférentielle intérieure ou extérieure en tant que surface de sortie, à une distance de la surface de sortie allant de 2/3 à 5/6 la hauteur de l'anneau.

8. Procédé selon la revendication 1,
**caractérisé en ce**
**que** l'outil (42) est introduit successivement dans chacun des évidements (30, 72) pour couper l'anneau (10, 60).

9. Procédé selon la revendication 1,
**caractérisé en ce**
**qu'**est pratiqué à partir d'au moins une surface extérieure (74) de l'anneau (60) un autre évidement (82, 84), tel qu'un trou borgne, un trou oblong ou une rainure, dans lequel ou laquelle est placé un élément de blocage ou de fixation (80).
